# FASCICULE DE BREVET EUROPEEN

(11) **EP 2 694 318 B1**
(45) Date de publication et mention de la délivrance du brevet: **15.05.2019**
(21) Numéro de dépôt: 12715876.4
(22) Date de dépôt: 29.03.2012
(51) Int. Cl.: B60K 37/06, G05G 1/10, H01H 19/06

(54) **DISPOSITIF DE COMMANDE ÉQUIPÉ D'UNE MOLETTE TOURNANTE**
STEUERUNGSVORRICHTUNG MIT EINEM DREHRAD
CONTROL DEVICE PROVIDED WITH A ROTARY WHEEL

(30) Priorité: 08.04.2011 FR 1153087
(43) Date de publication de la demande: 12.02.2014
(73) Titulaire: Aptiv Technologies Limited, St. Michael (BB)
(72) Inventeur: ISQUIERDO, Vincent, F-67100 Strasbourg (FR); CAILLOUX, Robin, F-67100 Strasbourg (FR)
(74) Mandataire: Robert, Vincent
(86) Numéro de dépôt international: PCT/EP2012/055713
(87) Numéro de publication internationale: WO 2012/136571

(56) Documents cités:
- EP-A1- 1 881 514

## Description

### DOMAINE TECHNIQUE

La présente invention concerne un dispositif de commande, notamment pour un véhicule automobile, équipé d'une molette tournante.

### ARRIERE-PLAN TECHNOLOGIQUE DE L'INVENTION

La présente invention concerne plus particulièrement un dispositif de commande comportant un élément de support, une façade de style qui est montée à l'avant sur l'élément de support et qui comporte une ouverture, un encodeur rotatif comportant un corps fixe et un arbre rotatif qui s'étend axialement vers l'avant dans l'ouverture de la façade de style, et une molette rotative qui est fixée à l'extrémité libre de l'arbre rotatif et qui s'étend au moins partiellement en saillie à l'avant de la façade de style pour pouvoir être manipulée par un utilisateur.

Ce type de dispositif de commande présente l'avantage d'être relativement simple de conception, la molette rotative pouvant être montée à force directement sur l'arbre rotatif de l'encodeur par l'intermédiaire de cannelures. L'inconvénient d'un tel montage est une sensation de flottement, dit « joystick effect » en anglais, au niveau de la molette rotative lorsque l'utilisateur la manipule, en raison d'un débattement angulaire indésirable de la molette rotative autour de son axe de rotation. Cette sensation de flottement produit un effet négatif sur la qualité perçue par l'utilisateur en ce qui concerne la fabrication et l'assemblage du dispositif de commande.

On connaît aussi un bouton tournant pour véhicule automobile tel que celui qui est décrit et représenté dans le document EP1881514A1. Toutefois, il ne résout pas tous les problèmes précités.

### RESUME DE L'INVENTION

La présente invention vise à remédier aux inconvénients mentionnés précédemment en proposant une solution simple, efficace, et économique.

Dans ce but, l'invention propose un dispositif de commande, notamment pour un véhicule automobile, comportant :
- un élément de support,
- une façade de style qui est montée à l'avant sur l'élément de support et qui comporte une ouverture,
- un encodeur rotatif comportant un corps fixe et un arbre rotatif qui s'étend axialement vers l'avant dans l'ouverture de la façade de style,
- une molette rotative qui est fixée à l'extrémité libre de l'arbre rotatif et qui s'étend au moins partiellement en saillie à l'avant de la façade de style pour pouvoir être manipulée par un utilisateur,
l'ouverture de la façade de style comportant une gouttière annulaire périphérique orientée axialement vers l'avant,
caractérisé en ce que la molette rotative comporte une jupe axiale périphérique qui s'étend axialement vers l'arrière au moins partiellement à l'intérieur de la gouttière, ladite jupe axiale comportant une surface interne de guidage qui coopère par glissement avec la gouttière de manière à guider la molette rotative en rotation autour de son axe, et en ce que la zone de glissement entre la jupe axiale et la gouttière est déportée axialement vers l'arrière par rapport à la zone de fixation de la molette rotative sur l'arbre rotatif.

L'agencement selon l'invention permet un meilleur guidage en rotation de la molette rotative en limitant ses possibilités de débattement angulaire par rapport à son axe de rotation. Ceci permet de supprimer les mouvements parasites de la molette rotative par rapport à la façade de style et améliore la qualité perçue par l'utilisateur.

Selon d'autres caractéristiques avantageuses :
- la surface interne de guidage de la jupe axiale est en contact continu étanche avec la surface correspondante de la gouttière sur toute sa circonférence ;
- l'ouverture de la façade de style comporte, à l'avant, un bord annulaire périphérique externe dont le diamètre interne est sensiblement égal au diamètre externe de la paroi de la molette agencée au droit du bord périphérique externe, de manière à minimiser le jeu radial entre la molette et la façade de style ;
- l'ouverture de la façade de style comporte, à l'arrière, un rebord annulaire interne prévu pour coopérer par glissement avec une paroi axiale externe du corps de l'encodeur en vue de permettre le centrage de l'encodeur par rapport à la façade de style ;
- l'encodeur est monté sur la face avant d'une plaque à circuits imprimés comportant un circuit électronique de commande de l'encodeur, et la plaque à circuits imprimés est montée à l'arrière de l'élément de support, l'élément de support comportant une fenêtre permettant le passage de l'encodeur ;
- la gouttière est réalisée venue de matière avec la façade de style ;
- l'encodeur comporte une fonction bouton-poussoir qui est actionnée par déplacement axial de la molette rotative vers l'arrière, depuis une position axiale de repos vers une position axiale actionnée, selon un débattement axial déterminé, la profondeur axiale de la gouttière étant au moins égale au débattement axial pour permettre l'actionnement de la fonction bouton-poussoir ;

La présente invention propose aussi une méthode d'assemblage d'un dispositif de commande, la méthode comportant les étapes suivantes :
- fixation de la façade de style sur l'élément de support,
- fixation et connexion de l'encodeur sur la plaque à circuits imprimés, caractérisée en ce qu'elle comporte en outre les étapes suivantes qui sont réalisées dans l'ordre :
- positionnement de la plaque à circuits imprimés à l'arrière de l'élément de support par insertion axiale du corps de l'encodeur dans l'ouverture délimitée par le rebord annulaire interne, la coopération par glissement du rebord annulaire interne avec la paroi axiale externe du corps de l'encodeur permettant le centrage de l'encodeur par rapport à la façade de style,
- fixation de la plaque à circuits imprimés sur l'élément de support après l'étape de positionnement,
- fixation de la molette rotative sur l'arbre rotatif en insérant axialement la jupe axiale de la molette rotative dans la gouttière.

La méthode selon l'invention permet de minimiser les jeux de fabrication en améliorant la qualité perçue de l'assemblage. Elle permet une fixation isostatique de la plaque à circuits imprimés avec l'encodeur.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue éclatée en perspective avant qui représente schématiquement un dispositif de commande à molette rotative réalisé conformément aux enseignements de l'invention ;
- la figure 2 est une vue éclatée en perspective retournée qui représente schématiquement le dispositif de commande de la figure 1 depuis l'arrière ;
- la figure 3 est une vue en coupe axiale partielle qui représente le dispositif de commande de la figure 1 après montage, la molette rotative occupant une position axiale de repos.

### DESCRIPTION DES MODES DE REALISATION PREFERES

Dans la suite de la description, des éléments identiques ou similaires pourront être désignés par des références identiques.

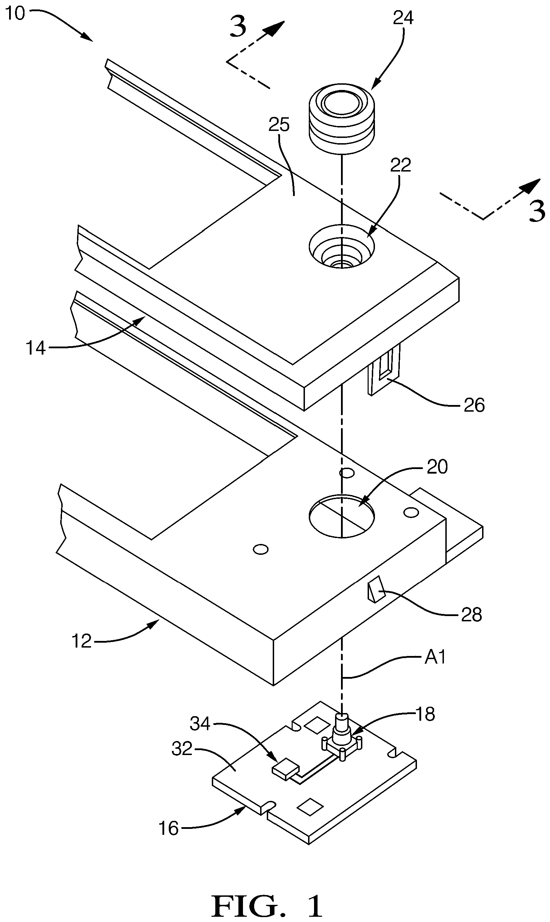

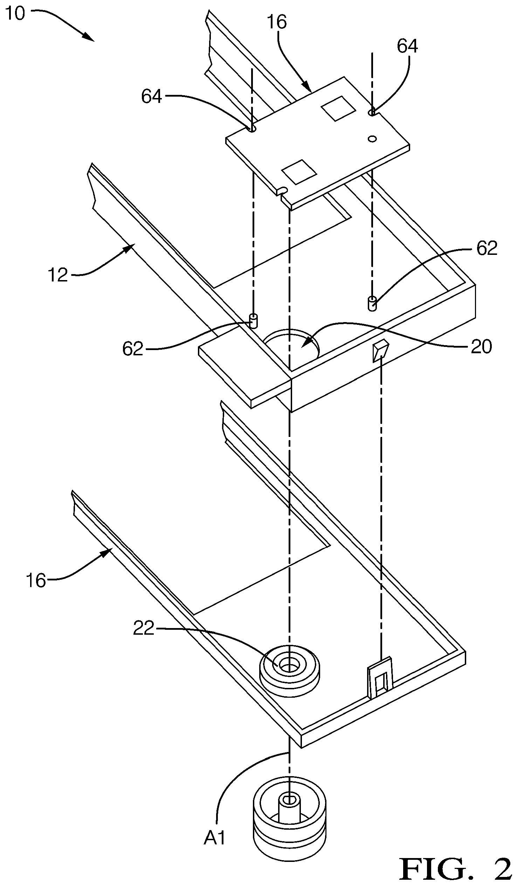

Sur les figures 1 à 3, on a représenté un dispositif de commande 10 qui est réalisé conformément aux enseignements de l'invention.

Selon le mode de réalisation représenté, le dispositif de commande 10 comporte un élément de support 12, ou boîtier, qui est recouvert à l'avant par une façade de style 14 et qui est muni à l'arrière d'une plaque à circuits imprimés 16 pourvue d'un encodeur rotatif 18 destiné à s'étendre axialement vers l'avant à travers une fenêtre 20 de l'élément de support 12 et à travers une ouverture 22 axiale aménagée dans la façade de style 14. Une molette rotative 24 est prévue pour être montée sur l'encodeur 18 par l'avant.

Dans la suite de la description, on utilisera à titre non limitatif une direction axiale suivant l'axe de rotation A1 de l'encodeur 18 et de la molette rotative, orientée de l'arrière vers l'avant, ce qui correspond à une orientation du bas vers le haut en considérant la figure 1. On utilisera aussi à titre non limitatif une orientation radiale par rapport à l'axe de rotation A1, des éléments étant qualifiés d'interne ou d'externe en fonction de leur position radiale par rapport à l'axe de rotation A1.

Selon le mode de réalisation représenté, le dispositif de commande 10 fait partie d'un panneau de commande destiné à être agencé sur le tableau de bord d'un véhicule automobile. Ainsi, l'élément de support 12 et la façade de style 14 peuvent comporter d'autres dispositifs de commande tels que des boutons-poussoirs, des touches de commande résistives, un écran d'affichage...

La façade de style 14 constitue un élément d'habillage de l'élément de support 12 qui définit l'aspect extérieur du dispositif de commande 10 visible par un utilisateur. La paroi principale 25 de la façade de style 14 s'étend ici globalement dans un plan radial. La façade de style 14 est ici munie de languettes de fixation 26 qui coopèrent avec des ergots 28 agencés sur l'élément de support 12 pour permettre une fixation de la façade de style 16 sur l'élément de support 12 par emboîtement élastique.

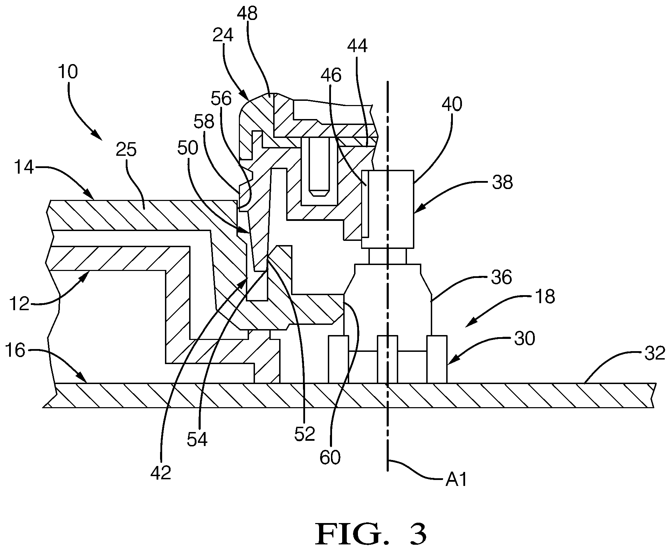

Comme représenté sur la figure 3, l'encodeur 18 comporte un corps principal 30 qui est fixé sur la face avant 32 de la plaque à circuits imprimés 16 et qui est connecté à un circuit électronique de commande 34 agencé sur ladite plaque 16. Le corps principal 30 comporte à l'avant un tronçon cylindrique 36 coaxial avec l'axe de rotation A1. L'encodeur 18 comporte aussi un arbre rotatif 38 qui s'étend axialement vers l'avant depuis le tronçon cylindrique 36 et qui est pourvu de cannelures 40 à son extrémité libre de façon à permettre un montage à force de la molette rotative 24.

La molette rotative 24 est prévue ici pour permettre à l'utilisateur de commander des fonctions du véhicule, par exemple un système d'air conditionné et/ou un autoradio. Lorsque l'utilisateur manipule la molette rotative 24 en la faisant tourner autour de son axe A1, il fait simultanément tourner l'encodeur 18 ce qui permet d'agir sur les fonctions associées du véhicule, via le circuit électronique de commande 34.

Dans sa position montée sur l'encodeur 18, telle que représentée sur la figure 3, la molette rotative 24 s'étend en partie à l'intérieur de l'ouverture 22 et en partie en saillie à l'avant de la façade de style 14 de manière à pouvoir être manipulée facilement par l'utilisateur.

Selon l'exemple représenté, l'encodeur 18 s'étend axialement à travers la fenêtre 20 de l'élément de support 12 et à travers l'ouverture 22.

Conformément aux enseignements de l'invention, l'ouverture 22 comporte une gouttière annulaire périphérique 42, ou rainure, qui est orientée axialement vers l'avant. La gouttière 42 est ici formée par une extension de la paroi principale 25 vers l'intérieur de l'ouverture 22, ladite extension ayant globalement une section axiale en forme de U. La gouttière 42 peut être réalisée par moulage d'une seule pièce avec la façade de style 14.

La molette rotative 24 comporte ici un moyeu central 44 pourvu d'un trou central de fixation 46 apte à coopérer par frottement avec les cannelures 40 de l'arbre rotatif 38 de façon à permettre le montage à force. De manière avantageuse, le moyeu central 44 est pourvu sur sa face avant, et débordant sur sa paroi périphérique externe, d'une portion de préhension 48 en matériau plus souple destinée à faciliter la préhension de la molette rotative 24 par l'utilisateur.

Conformément aux enseignements de l'invention, le moyeu central 44 de la molette rotative 24 est pourvu d'une jupe axiale périphérique 50 qui s'étend axialement vers l'arrière en pénétrant partiellement à l'intérieur de la gouttière 42. La jupe axiale 50 est ici réalisée d'une seule pièce par moulage avec le moyeu central 44. De préférence, la jupe axiale 50 s'étend axialement vers l'arrière au-delà de l'extrémité axiale arrière du moyeu central 44.

La jupe axiale 50 comporte une surface interne de guidage 52 qui coopère par glissement avec la gouttière 42 de manière à guider la molette rotative 24 en rotation autour de son axe A1. Plus précisément, la surface interne de guidage 52 est en contact continu étanche avec la surface correspondante 54 de la gouttière 42 sur toute sa circonférence. Ce contact étanche permet notamment d'empêcher la pénétration de poussières ou de liquide à l'intérieur du dispositif de commande, entre la molette rotative 24 et la façade de style 14, tout en permettant un glissement relatif entre les deux pièces. Ce montage de la jupe axiale 50 par rapport à la gouttière 42 permet aussi d'empêcher la transmission de décharges électrostatiques vers la plaque à circuits imprimés 16 depuis l'avant de la façade de style 14.

Selon le mode de réalisation représenté, la surface interne de guidage 52 et la surface de contact correspondante 54 de la gouttière 42 sont globalement cylindriques dans une zone de glissement. En variante, l'une des surfaces pourrait être munie d'un bourrelet annulaire définissant la zone de contact étanche entre la molette rotative 24 et la gouttière 42.

On note que les matériaux destinés à être en contact au niveau desdites surfaces et les ajustements dimensionnels entre la molette rotative 24 et la gouttière 42 sont prévus pour faciliter le glissement de la jupe axiale 50 contre la gouttière 42 de manière que l'utilisateur ne ressente pas des frottements désagréables lorsqu'il manipule la molette rotative 24.

Avantageusement, la zone de glissement entre la jupe axiale et la gouttière est déportée axialement vers l'arrière par rapport à la zone de fixation de la molette rotative 24 sur l'arbre rotatif 38. Ceci permet notamment de maintenir la molette rotative 24 dans son orientation axiale en l'empêchant de pivoter autour d'un axe transversal.

Avantageusement, l'ouverture 22 de la façade de style 14 comporte, à son extrémité axiale avant, un bord annulaire périphérique externe 56 dont le diamètre interne est sensiblement égal au diamètre externe de la paroi de la molette rotative 24 agencée au droit du bord périphérique externe 56. Comme représenté sur la figure 3, la jupe axiale 50 comporte ici sur sa surface axiale externe un bourrelet annulaire 58 prévue pour être agencée radialement en face du bord périphérique externe 56. Cet agencement du bourrelet annulaire 58 par rapport au bord périphérique externe 56 permet de minimiser le jeu radial entre la molette rotative 24 et la façade de style 14, ce qui améliore la qualité perçue par l'utilisateur, notamment du point de vue de la qualité d'ajustement des pièces du dispositif de commande 10.

Selon une autre caractéristique avantageuse, l'ouverture 22 comporte, à son extrémité axiale arrière, un rebord annulaire interne 60 qui est prévu pour coopérer par glissement avec le tronçon cylindrique 36 du corps principal 30 de l'encodeur 18 lors de l'insertion axiale de l'encodeur 18 dans l'ouverture 22. Le rebord annulaire interne 60 définit ici un trou de section circulaire sensiblement complémentaire de la section transversale du tronçon cylindrique 36. Ce rebord annulaire interne 60 a une fonction de centrage de l'encodeur 18 par rapport à la façade de style 14 et à son l'ouverture 22.

Avantageusement, l'encodeur 18 comporte une fonction bouton-poussoir qui est actionnée par déplacement axial de la molette rotative 24 vers l'arrière. Sur la figure 3 la molette rotative 24 est représentée dans une position axiale de repos non actionnée. Lorsque l'utilisateur exerce une pression axiale sur la molette rotative 24, celle-ci coulisse axialement vers une position axiale arrière actionnée (non représentée) en provoquant une commutation dans l'encodeur 18. La distance axiale entre la position de repos et la position actionnée définit un débattement axial déterminé qui est inférieur à la profondeur axiale de la gouttière 42 de manière que la molette rotative 24 ne soit pas stoppée dans sa course avant la fin de la commutation.

On note que la coopération de la jupe axiale 50 avec la gouttière 42 permettent de protéger l'encodeur 18 lorsque la fonction bouton-poussoir est utilisée. En effet, le guidage axial obtenu permet à l'arbre rotatif 38 de toujours travailler selon son axe A1 et par conséquent de d'être moins sollicité en cisaillement. De plus, le fond de la gouttière 42 peut être utilisé comme surface de butée pour limiter le débattement axial de la molette rotative 24 et de l'arbre rotatif 38.

Un autre avantage du dispositif de commande 10 selon l'invention est de minimiser les bruits parasites puisque les mouvements parasites de la molette rotative 24 par rapport à la façade de style 14 sont supprimés. La gouttière 42 et la jupe axiale 50 forment également des chicanes qui empêchent la transmission des bruits de commutation depuis la plaque à circuits imprimés 14 vers l'extérieur du dispositif de commande 10.

On décrit maintenant une méthode d'assemblage du dispositif de commande 10 selon un mode de réalisation avantageux de l'invention.

Dans un premier temps, la façade de style 14 est fixée sur l'élément de support 12, ici au moyen des languettes 26 et des ergots 28, par emboîtement élastique.

En parallèle, l'encodeur 18 est fixé et connecté sur la face avant de la plaque à circuits imprimés 16.

Dans un second temps, la plaque à circuits imprimés 16 est amenée à l'arrière de l'élément de support 12 et plaquée contre la face arrière de l'élément de support 12 en insérant le tronçon cylindrique 36 de l'encodeur 18 dans l'ouverture 22.

Pendant l'insertion de l'encodeur 18 dans l'ouverture 22, le tronçon cylindrique 36 vient coulisser contre le rebord annulaire interne 60 ce qui contribue au centrage de l'encodeur 18 et de la plaque à circuits imprimés 16 par rapport à la façade de style 14. Pendant cette phase de l'assemblage, l'encodeur 18 joue donc le rôle d'un pion de centrage. Ceci est possible notamment du fait que les tolérances dimensionnelles du diamètre du corps principal 30 de l'encodeur 18 sont très faibles.

Avantageusement, la face arrière de l'élément de support 12 et la plaque à circuits imprimés 16 comportent des pions de centrage 62 et des encoches 64 associés pour aider au positionnement de la plaque à circuits imprimés 16 par rapport à l'élément de support 12 et à la façade de style 14, notamment pour assurer un positionnement angulaire précis par rapport à l'axe de rotation A1.

Une fois la plaque à circuits imprimés 16 plaquée contre l'élément de support 12, sont positionnement est assuré par l'encodeur 18 et les pions de centrage 62, ce qui permet la fixation de la plaque à circuits imprimés 16 sur l'élément de support 12, par exemple par vissage. Le montage obtenu est du type isostatique.

Dans un troisième temps, la molette rotative 24 est insérée axialement dans l'ouverture 22 et montée à force sur l'arbre rotatif 38 de l'encodeur 18. Au cours de ce montage, la jupe axiale 50 vient coulisser dans la gouttière 42 ce qui contribue à son guidage axial et assure un montage parfaitement coaxial du moyeu 44 de la molette rotative 24 sur l'arbre rotatif 38.

L'agencement et l'assemblage du dispositif de commande 10 selon l'invention permettent notamment d'assurer le centrage de la molette rotative 24 dans l'ouverture 22 ce qui garantit un espace radial sensiblement constant entre la paroi axiale périphérique externe de la molette rotative 24 et le bord périphérique externe 56 de l'ouverture 22. Cela permet également de réduire les jeux de fonctionnement en minimisant cet espace radial, par exemple au moyen du bourrelet annulaire 50, en tenant compte des tolérances de fabrication.

## Revendications

1. Dispositif de commande (10), notamment pour un véhicule automobile, comportant :
- un élément de support (12),
- une façade de style (14) qui est montée à l'avant sur l'élément de support (12) et qui comporte une ouverture (22),
- un encodeur rotatif (18) comportant un corps fixe (30) et un arbre rotatif (38) qui s'étend axialement vers l'avant dans l'ouverture (22) de la façade de style (14),
- une molette rotative (24) qui est fixée à l'extrémité libre de l'arbre rotatif (38) et qui s'étend au moins partiellement en saillie à l'avant de la façade de style (14) pour pouvoir être manipulée par un utilisateur,
l'ouverture (22) de la façade de style (14) comportant une gouttière annulaire périphérique (42) orientée axialement vers l'avant,
**caractérisé en ce que** la molette rotative (24) comporte une jupe axiale périphérique (50) qui s'étend axialement vers l'arrière au moins partiellement à l'intérieur de la gouttière (42), ladite jupe axiale (50) comportant une surface interne de guidage (52) qui coopère par glissement avec la gouttière (42) de manière à guider la molette rotative (24) en rotation autour de son axe (A1), et **en ce que** la zone de glissement entre la jupe axiale (50) et la gouttière (42) est déportée axialement vers l'arrière par rapport à la zone de fixation de la molette rotative (24) sur l'arbre rotatif (38).

2. Dispositif de commande (10) selon la revendication précédente, **caractérisé en ce que** la surface interne de guidage (52) de la jupe axiale (50) est en contact continu avec la surface correspondante (54) de la gouttière (42) sur toute sa circonférence de manière à fermer l'ouverture de manière étanche.

3. Dispositif de commande (10) selon l'une quelconque des revendications précédentes, **caractérisé en ce que** l'ouverture (22) de la façade de style (14) comporte, à l'avant, un bord annulaire périphérique externe (56) dont le diamètre interne est sensiblement égal au diamètre externe de la paroi de la molette (24) agencée au droit du bord périphérique externe (56), de manière à minimiser le jeu radial entre la molette (24) et la façade de style (14).

4. Dispositif de commande (10) selon l'une quelconque des revendications précédentes, **caractérisé en ce que** l'ouverture de la façade de style (14) comporte, à l'arrière, un rebord annulaire interne (60) prévu pour coopérer par glissement avec une paroi axiale externe (36) du corps (30) de l'encodeur (18) lors de son insertion dans l'ouverture (22) en vue de permettre le centrage de l'encodeur (18) par rapport à la façade de style (14).

5. Dispositif de commande (10) selon l'une quelconque des revendications précédentes, **caractérisé en ce que** l'encodeur (18) est monté sur la face avant d'une plaque à circuits imprimés (16) comportant un circuit électronique de commande (34) de l'encodeur, et **en ce que** la plaque à circuits imprimés (16) est montée à l'arrière de l'élément de support (12), l'élément de support (12) comportant une fenêtre (20) permettant le passage de l'encodeur rotatif (18).

6. Dispositif de commande (10) selon l'une quelconque des revendications précédentes, **caractérisé en ce que** la gouttière (42) est réalisée venue de matière avec la façade de style (14).

7. Dispositif de commande (10) selon l'une quelconque des revendications précédentes, **caractérisé en ce que** l'encodeur (18) comporte une fonction bouton-poussoir qui est actionnée par déplacement axial de la molette rotative (24) vers l'arrière, depuis une position axiale de repos vers une position axiale actionnée, selon un débattement axial déterminé, la profondeur axiale de la gouttière (42) étant au moins égale au débattement axial pour permettre l'actionnement de la fonction bouton-poussoir.

8. Méthode d'assemblage d'un dispositif de commande (10) selon l'une quelconque des revendications précédentes prise en combinaison avec les revendications 4 et 5, la méthode comportant les étapes suivantes :
- fixation de la façade de style (14) sur l'élément de support (12),
- fixation et connexion de l'encodeur rotatif (18) sur la plaque à circuits imprimés (16),
**caractérisée en ce qu'**elle comporte en outre les étapes suivantes qui sont réalisées dans l'ordre :
- positionnement de la plaque à circuits imprimés (16) à l'arrière de l'élément de support (12) par insertion axiale du corps (30) de l'encodeur (18) dans l'ouverture (22) délimitée par le rebord annulaire interne (60), la coopération par glissement du rebord annulaire interne (60) avec la paroi axiale externe du corps (30) de l'encodeur (18) permettant le centrage de l'encodeur (18) par rapport à la façade de style (14),
- fixation de la plaque à circuits imprimés (16) sur l'élément de support (12) après l'étape de positionnement,
- fixation de la molette rotative (24) sur l'arbre rotatif (38) en insérant axialement la jupe axiale (50) de la molette rotative (24) dans la gouttière (42).

## Patentansprüche

1. Steuervorrichtung (10), insbesondere für ein Kraftfahrzeug, enthaltend:
- ein Tragelement (12),
- eine Zierstirnseite (14), die auf der Vorderseite an dem Tragelement (12) angebracht ist und eine Öffnung (22) aufweist,
- einen drehbaren Encoder (18) mit einem festen Körper (30) und einer drehbaren Welle (38), die sich axial nach vorne in der Öffnung (22) der Zierstirnfläche (14) erstreckt,
- einen Drehknopf (24), der an das freie Ende der drehbaren Welle (38) befestigt ist und sich an der Vorderseite der Zierstirnfläche (14) zumindest teilweise vorspringend erstreckt, um von einem Benutzer betätigt werden zu können,
wobei die Öffnung (22) der Zierstirnfläche (14) eine ringförmige Umfangsrinne (42) aufweist, die axial nach vorne ausgerichtet ist,
**dadurch gekennzeichnet, dass** der Drehknopf (24) eine axiale Umfangsschürze (50) aufweist, die sich axial nach hinten zumindest teilweise im Inneren der Rinne (42) erstreckt, wobei die axiale Schürze (50) einen innere Führungsfläche (52) aufweist, die mit der Rinne (42) gleitbeweglich zusammenwirkt, so dass der Drehknopf (24) um seine Achse (A1) drehend geführt wird, und dass der Gleitbereich zwischen der axialen Schürze (50) und der Rinne (42) axial nach hinten bezüglich des Befestigungsbereichs des Drehknopfs (24) an der drehbaren Welle (38) versetzt ist.

2. Steuervorrichtung (10) nach dem vorangehenden Anspruch, **dadurch gekennzeichnet, dass** die innere Führungsfläche (52) der axialen Schürze (50) mit der entsprechenden Fläche (54) der Rinne (42) über ihren gesamten Umfang kontinuierlich in Kontakt ist, so dass die Öffnung in dichter Weise verschlossen wird.

3. Steuervorrichtung (10) nach einem der vorangehenden Ansprüche, **dadurch gekennzeichnet, dass** die Öffnung (22) der Zierstirnfläche (14) auf der Vorderseite einen äußeren, ringförmigen Umfangsrand (56) aufweist, dessen Innendurchmesser im Wesentlichen gleich dem Außendurchmesser der Wand des Drehknopfs (24) ist, die im Bereich des äußeren Umfangsrandes (56) angeordnet ist, so dass das radiale Spiel zwischen Drehknopf (24) und Zierstirnfläche (14) minimiert wird.

4. Steuervorrichtung (10) nach einem der vorangehenden Ansprüche, **dadurch gekennzeichnet, dass** die Öffnung der Zierstirnfläche (14) auf der Hinterseite eine ringförmige Innenkante (60) aufweist, die dazu vorgesehen ist, gleitbeweglich mit einer axialen Außenwand (36) des Körpers (30) des Encoders (18) bei seinem Einführen in die Öffnung (22) zusammenzuwirken, um das Zentrieren des Encoders (18) bezüglich der Zierstirnfläche (14) zu gestatten.

5. Steuervorrichtung (10) nach einem der vorangehenden Ansprüche, **dadurch gekennzeichnet, dass** der Encoder (18) an der Vorderseite einer gedruckten Leiterplatte (16) angebracht ist, die eine Steuerschaltung (34) des Encoders enthält, und dass die gedruckte Leiterplatte (16) an der Hinterseite des Tragelements (12) angebracht ist, wobei das Tragelement (12) ein Fenster (20) aufweist, welches den Durchtritt des drehbaren Encoders (18) gestattet.

6. Steuervorrichtung nach einem der vorangehenden Ansprüche, **dadurch gekennzeichnet, dass** die Rinne (42) stoffschlüssig mit der Zierstirnfläche (14) ausgebildet ist.

7. Steuervorrichtung (10) nach einem der vorangehenden Ansprüche, **dadurch gekennzeichnet, dass** der Encoder (18) eine Druckknopffunktion hat, die durch axiales Verlagern des Drehknopfs (24) nach hinten ausgehend von einer axialen Ruheposition in eine axiale Betätigungsposition mit einer bestimmten axialen Auslenkung betätigt wird, wobei die axiale Tiefe der Rinne (42) zumindest gleich der axialen Auslenkung ist, um die Betätigung der Druckknopffunktion zu gestatten.

8. Verfahren zum Montieren einer Steuervorrichtung (10) nach einem der vorangehenden Ansprüche in Kombination mit den Ansprüchen 4 und 5, wobei das Verfahren die nachstehenden Schritte umfasst:
- Befestigen der Zierstirnfläche (14) an das Tragelement (12),
- Befestigen und Verbinden des drehbaren Encoders (18) mit der gedruckten Leiterplatte (16),
**dadurch gekennzeichnet, dass** es ferner die nachstehenden Schritte umfasst, die in dieser Reihenfolge ausgeführt werden:
- Positionieren der gedruckten Leiterplatte (16) an der Hinterseite des Tragelements (12) durch axiale Einführung des Körpers (30) des Encoders (18) in die Öffnung (22), die durch die ringförmige Innenkante (60) begrenzt ist, wobei das gleitbewegliche Zusammenwirken der ringförmigen Innenkante (60) mit der axialen Außenwand des Körpers (30) des Encoders (18) das Zentrieren des Encoders (18) bezüglich der Zierstirnfläche (14) gestattet,
- Befestigen der gedruckten Leiterplatte (16) an das Tragelement (12) nach dem Schritt des Positionierens,
- Befestigen des Drehknopfs (24) an die drehbare Welle (38) durch axiales Einführen der axialen Schürze (50) des Drehknopfs (24) in die Rinne (42).

## Claims

1. Control device (10), notably for a motor vehicle, comprising:
- a support element (12),
- a stylistic façade (14) which is mounted in front on the support element (12) and comprises an opening (22),
- a rotary encoder (18) comprising a fixed body (30) and a rotary shaft (38) which extends axially forwards in the opening (22) in the stylistic façade (14),
- a rotary knob (24) which is fixed to the free end of the rotary shaft (38) and which extends at least partially as a projection in front of the stylistic façade (14) so that it can be manipulated by a user,
the opening (22) in the stylistic façade (14) comprising a peripheral annular gutter (42) facing axially forwards,
**characterized in that** the rotary knob (24) comprises a peripheral axial skirt (50) which extends axially rearwards at least partially into the gutter (42), the said axial skirt (50) comprising an internal guide surface (52) which collaborates in sliding with the gutter (42) so as to guide the rotary knob (24) in rotation about its axis (A1), and **in that** the zone of sliding between the axial skirt (50) and the gutter (42) is offset axially towards the rear with respect to the zone of attachment of the rotary knob (24) to the rotary shaft (38).

2. Control device (10) according to the preceding claim, **characterized in that** the internal guide surface (52) of the axial skirt (50) is in continuous contact with the corresponding surface (54) of the gutter (42) over the entire circumference thereof so as to seal the opening closed.

3. Control device (10) according to any one of the preceding claims, **characterized in that** the opening (22) in the stylistic façade (14) comprises, at the front, an external peripheral annular edge (56) the internal diameter of which is substantially equal to the external diameter of the wall of the knob (24) arranged in line with the external peripheral edge (56), so as to minimize the radial clearance between the knob (24) and the stylistic façade (14).

4. Control device (10) according to any one of the preceding claims, **characterized in that** the opening in the stylistic façade (14) comprises, at the rear, an internal annular rim (60) designed to collaborate in sliding with an external axial wall (36) of the body (30) of the encoder (18) as it is inserted into the opening (22) so as to allow the encoder (18) to become centred with respect to the stylistic façade (14).

5. Control device (10) according to any one of the preceding claims, **characterized in that** the encoder (18) is mounted on the front face of a printed circuit board (16) comprising an electronic control circuit (34) for the encoder, and **in that** the printed circuit board (16) is mounted on the rear of the support element (12), the support element (12) comprising a window (20) for the passage of the rotary encoder (18).

6. Control device (10) to any one of the preceding claims, **characterized in that** the gutter (42) is formed as an integral part of the stylistic façade (14).

7. Control device (10) according to any one of the preceding claims, **characterized in that** the encoder (18) comprises a push-button function which is actuated by moving the rotary knob (24) axially towards the rear, from an axial position at rest towards an actuated axial position, with a determined axial travel, the axial depth of the gutter (42) being at least equal to the axial travel so as to allow the push-button function to be actuated.

8. Method for assembling a control device (10) according to any one of the preceding claims considered in combination with Claims 4 and 5, the method comprising the following steps:
- fixing the stylistic façade (14) on the support element (12),
- fixing and connecting the rotary encoder (18) on the printed circuit board (16),
**characterized in that** it further comprises the following steps which are carried out in this order:
- positioning the printed circuit board (16) to the rear of the support element (12) by axially inserting the body (30) of the encoder (18) into the opening (22) delimited by the internal annular rim (60), sliding collaboration of the internal annular rim (60) with the external axial wall of the body (30) of the encoder (18), allowing the encoder (18) to become centred with respect to the stylistic façade (14),
- fixing the printed circuit board (16) on the support element (12) after the positioning step,
- fixing the rotary knob (24) on the rotary shaft (38) while axially inserting the axial skirt (50) of the rotary knob (24) into the gutter (42).
